# EUROPÄISCHE PATENTANMELDUNG

(11) **EP 1 865 569 A1**
(43) Veröffentlichungstag der Anmeldung: **12.12.2007**
(21) Anmeldenummer: 06011781.9
(22) Anmeldetag: 07.06.2006
(51) Int. Cl.: H01M 8/04

(54) **Verfahren zur Wärmeabfuhr aus einer Brennstoffzellenanlage sowie Brennstoffzellenanlage**

(71) Anmelder: SIEMENS AKTIENGESELLSCHAFT, 80333 München (DE)
(72) Erfinder: Mattejat, Arno, 91056 Erlangen (DE); Stühler, Walter, 96114 Hirschaid (DE)

(57) **Zusammenfassung**

Bei Brennstoffzellenanlagen (1) entsteht in den Brennstoffzellen (3) als Folge der Reaktion von Wasserstoff mit Sauerstoff Wärme, die kontinuierlich abgeführt werden muss. Weiterhin ist es notwendig, Verlustwärme von elektrischen Komponenten der Brennstoffzellenanlage (1), wie z.B. von Umrichtern, Transformatoren oder Schaltschranken, aus der Brennstoffzellenanlage (1) abzuführen.
Um eine ausreichende Wärmeabfuhr auch bei stark wechselnden Umbebungsbedingungen zu gewährleisten, wird ein Verfahren vorgeschlagen, bei dem die Wärme der Brennstoffzellenanlage (3) an ein erstes Kühlmittel übertragen wird, und bei dem Wärme des ersten Kühlmittels wahlweise an ein zweites Kühlmittel zum Beispiel Wasser an ein drittes Kühlmittel zum Beispiel Luft oder sowohl an das zweite als auch an das dritte Kühlmittel übertragen wird, wobei die Wärmekapazität des zweiten Kühlmittels unterschiedlich ist zu der Wärmekapazität des dritten Kühlmittels.

## Beschreibung

Die Erfindung betrifft ein Verfahren zur Wärmeabfuhr aus einer Brennstoffzellenanlage gemäß Oberbegriff des Patentanspruchs 1 bzw. eine Brennstoffzellenanlage gemäß Oberbegriff des Patentanspruchs 6; eine derartige Brennstoffzellenanlage ist z.B. aus der DE 199 10 695 C1 bekannt.

Bei Brennstoffzellenanlagen entsteht als Folge der Reaktion von Wasserstoff mit Sauerstoff Wärme, die kontinuierlich abgeführt werden muss. Weiterhin ist es notwendig, Verlustwärme von elektrischen Komponenten der Brennstoffzellenanlage, wie z.B. von Umrichtern, Transformatoren oder Schaltschränken, aus der Brennstoffzellenanlage abzuführen.

Für mobile Brennstoffzellenanlagen ist es bereits bekannt, die Wärme zuerst an ein erstes Kühlmittel (üblicherweise Wasser) eines ersten Kühlmittelkreislaufes und von dem ersten Kühlmittelkreislauf an Umgebungsluft zu übertragen. Für stationäre Brennstoffzellenanlagen ist es zudem bekannt, die Wärme des ersten Kühlmittelkreislaufes an ein zweites Kühlmittel eines zweiten Kühlmittelkreislaufes zu übertragen. So wird z.B. bei einer aus der DE 199 10 695 C1 bekannten Brennstoffzellenanlage die Wärme der Brennstoffzellen zuerst an Wasser eines Kühlwasserkreislaufes und dann von dem Kühlwasserkreislauf an einen Heizwasserkreislauf übertragen.

Ist eine Brennstoffzellenanlage wechselnden Umgebungsbedingungen ausgesetzt, so muss sichergestellt werden, dass auch unter extremen Umgebungsbedingungen für eine ausreichende Kühlung gesorgt ist. Dies gilt insbesondere für Brennstoffzellenanlagen auf Schiffen. Hier muss eine ausreichende Kühlung sowohl bei sehr tiefen Temperaturen (z.B. bei einem Aufenthalt des Schiffes im Polarmeer) als auch bei sehr hohen Temperaturen (z.B. bei einem Aufenthalt des Schiffes in tropischen Gewässern) gewährleistet sein. Auch bei einem längerzeitigen Aufenthalt an einem einzigen (festen) Standort können sich bei Tag-/Nachtübergängen oder Jahreszeitenwechsel (Sommer/Winter) stark ändernde Umgebungsbedingungen ergeben.

Es ist deshalb Aufgabe vorliegender Erfindung, ein Verfahren zur Wärmeabfuhr aus einer Brennstoffzellenanlage sowie eine Brennstoffzellenanlage anzugeben, die eine für den Betrieb der Brennstoffzellen und ggf. weiterer elektrischer Komponente der Brennstoffzellenanlage ausreichende Wärmeabfuhr auch bei stark wechselnden Umgebungsbedingungen ermöglichen.

Die Lösung der auf das Verfahren gerichteten Aufgabe gelingt durch ein Verfahren gemäß Patentanspruch 1. Die Lösung der auf die Brennstoffzellenanlage gerichteten Aufgabe gelingt durch eine Brennstoffzellenanlage gemäß Patentanspruch 6. Vorteilhafte Ausgestaltungen sind jeweils Gegenstand der Unteransprüche.

Aufgrund der unterschiedlichen Wärmekapazitäten des zweiten und dritten Kühlmittels werden sich bei sich ändernden Umgebungstemperaturen Temperaturunterschiede zwischen dem zweiten und dem dritten Kühlmittel einstellen. Diese Temperaturunterschiede können gezielt zur Verbesserung der Wärmeabfuhr aus der Brennstoffzellenanlage genutzt werden. Hierzu wird die Wärme des ersten Kühlmittels wahlweise an das zweite Kühlmittel, an das dritte Kühlmittel oder sowohl an das zweite als auch an das dritte Kühlmittel übertragen. So kann die Wärmeabfuhr beispielsweise gezielt über das Kühlmittel mit der zu einem bestimmten Zeitpunkt niedrigsten Temperatur erfolgen. Bei sich ändernden Temperaturverhältnissen wird dann auf eine Kühlung über das andere Kühlmittel umgeschaltet. Weiterhin kann auch eine Kühlung über beide Kühlmittel erfolgen. Insgesamt ist hierdurch eine große Flexibilität in der Kühlung einer Brennstoffzellenanlage zur Sicherstellung einer ausreichenden und bedarfsgerechten Wärmeabfuhr aus der Brennstoffzellenanlage erzielbar. Dies gilt insbesondere für transportable oder mobile Brennstoffzellenanlagen, die an unterschiedlichen Einsatzorten und somit unter unterschiedlichen Umgebungsbedingungen betrieben werden.

Bevorzugt erfolgt die Wahl der Wärmeübertragung in Abhängigkeit von der Temperatur des zweiten Kühlmittels und der Temperatur des dritten Kühlmittels.

Bei dem zweiten Kühlmittel handelt es sich bevorzugt um Wasser, im Falle eines Schiffes vorzugsweise um Seewasser, und bei dem dritten Kühlmittel um Luft. Hierbei liegt die Erkenntnis zugrunde, dass Wasser und Luft zum einen als Kühlmittel relativ einfach verfügbar sind und zum anderen aufgrund ihrer unterschiedlichen Wärmekapazitäten bei wechselnden Umgebungstemperaturen, z.B. bei einem Wechsel von Tag zu Nach oder umgekehrt, deutlich unterschiedliche Temperaturverläufe aufweisen. So ist beispielsweise bei Luft die Temperaturdifferenz zwischen Tag und Nacht wesentlich größer als bei Wasser, insbesondere bei Seewasser. Während am Tage die Wärmeabfuhr über das Kühlwasser erfolgt, kann die Wärmeabfuhr nachts dagegen über die Umgebungsluft erfolgen. Ähnliche Verhältnisse gelten für die Temperaturdifferenz zwischen Sommer und Winter.

Die Flexibilität in der Wärmeabfuhr kann dadurch noch vergrößert werden, dass Wärme des zweiten Kühlmittels an das dritte Kühlmittel übertragen wird. Im Fall, dass es sich bei dem zweiten Kühlmittel um Wasser und bei dem dritten Kühlmittel um Umgebungsluft handelt, wird somit auch Wärme des Wassers noch an die Umgebungsluft übertragen.

Eine erfindungsgemäße Brennstoffzellenanlage umfasst einen Kühlmittelkreislauf mit einem ersten Kühlmittel zur Abfuhr von Wärme aus der Brennstoffzellenanlage, einen in den ersten Kühlflüssigkeitskreislauf schaltbaren ersten Wärmeübertrager zur Übertragung von Wärme des ersten Kühlmittels an ein zweites Kühlmittel und einen in den ersten Kühlmittelkreislauf schaltbaren zweiten Wärmeübertrager zur Übertragung von Wärme des ersten Kühlmittels an ein drittes Kühlmittel, und Stellglieder, durch die wahlweise der erste Wärmeübertrager, der zweite Wärmeübertrager oder sowohl der erste als auch der zweite Wärmeübertrager in den Kühlmittelkreislauf schaltbar sind, wobei die Wärmekapazität des zweiten Kühlmittels unterschiedlich ist zu der Wärmekapazität des dritten Kühlmittels.

Die für das erfindungsgemäße Verfahren genannten Überlegungen und Vorteile gelten entsprechend für die erfindungsgemäße Brennstoffzellenanlage.

Eine weitergehende Vergrößerung der Flexibilität in der Wärmeabfuhr ist dadurch möglich, dass die Brennstoffzellenanlage einen dritten Wärmeübertrager zur Übertragung von Wärme des zweiten Kühlmittels an das dritte Kühlmittel aufweist.

Eine Optimierung der Wärmeabfuhr ist dadurch möglich, dass die Brennstoffzellenanlage eine Steuereinrichtung zur Steuerung der Stellglieder in Abhängigkeit von der Temperatur des zweiten Kühlmittels und der Temperatur des dritten Kühlmittels aufweist.

Vorzugsweise ist durch Steuerung der Stellglieder sogar die Temperatur des ersten Kühlmittels auf einen vorgegeben Wert regelbar.

Gemäß einer ersten besonders einfachen Ausgestaltung der Erfindung sind der erste und der zweite Wärmeübertrager parallel in den Kühlmittelkreislauf schaltbar.

Gemäß einer zweiten besonders einfachen Ausgestaltung der Erfindung sind der erste und der zweite Wärmeübertrager seriell in den Kühlmittelkreislauf schaltbar.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: eine erste Ausführungsform einer erfindungsgemäßen Brennstoffzellenanlage; und
- FIG 2: eine zweite Ausführungsform einer erfindungsgemäßen Brennstoffzellenanlage.

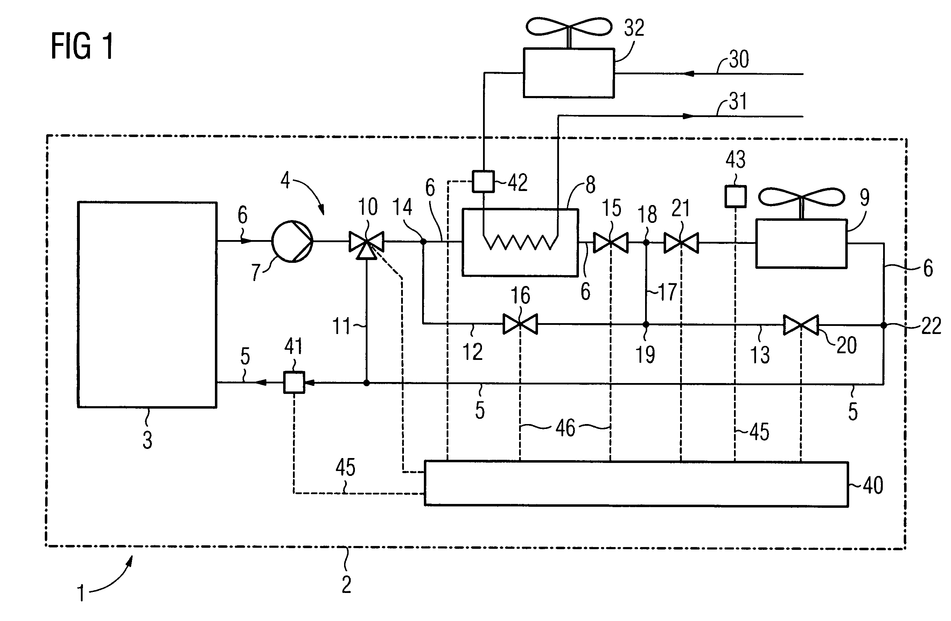

FIG 1 zeigt eine transportable Brennstoffzellenanlage 1, die in einem Transportcontainer 2 untergebracht ist, der an Bord eines Schiffes oder auf Land als emissionsarmes Stromerzeugungsaggregat genutzt werden kann. Bevorzugte Einsatzgebiete sind ökologisch bezüglich Schadstoffemissionen besonders sensible Einsatzgebiete wie z.B. das Polarmeer, die Arktis oder tropische Gewässer.

Ein Brennstoffzellenblock 3 wird von einem ersten Kühlmittel eines ersten Kühlmittelkreislaufes 4 durchströmt. Als Kühlmittel in dem ersten Kühlmittelkreislauf 4 wird beispielsweise deionisiertes Wasser verwendet. Das Kühlmittel wird dem Brennstoffzellenblock 3 über eine Zufuhrleitung 5 zugeführt und über eine Abfuhrleitung 6 abgeführt. Zum Pumpen des Kühlmittels durch den Kreislauf 4 und den Brennstoffzellenblock 3 ist in die Abfuhrleitung 6 eine Pumpe 7 geschaltet.

In den Kreislauf 4 sind in Serie, d.h. in Strömungsrichtung des Kühlmittels hintereinander, zwei Wärmeübertrager 8, 9 geschaltet. Mittels eines vor dem Wärmeübertrager 8 in die Abfuhrleitung 6 geschalteten hinsichtlich der Durchflussmenge regelbaren Ventils 10 und einer Bypassleitung 11 kann der gesamte oder ein Teil des den Brennstoffzellenblock 3 verlassenden erwärmten Kühlmittelstromes, ohne dass er die Wärmeübertrager 8, 9 durchströmt, direkt wieder dem Brennstoffzellenblock 3 zugeführt werden. Eine Kühlung des ersten Kühlmittels kann somit verhindert werden. Dies kann in bestimmten Betriebsphasen der Brennstoffzellenanlage gewünscht sein. So ist es z.B. beim Starten der Brennstoffzellenanlage erwünscht, dass sich der Brennstoffzellenblock 3 und damit auch das erste Kühlmittel möglichst schnell erwärmt.

Mittels einer Bypassleitung 12 kann ein Anteil oder der ganze erwärmte Kühlmittelstrom an dem Wärmeübertrager 8 vorbeigeführt werden. Hierzu ist in die Abfuhrleitung 6 vor den Wärmeübertrager 8 ein Verteiler 14 geschaltet, über den der erwärmte Kühlmittelstrom in einen durch den Wärmeübertrager 8 geführten ersten erwärmten Kühlmittelteilstrom und einen durch die Bypassleitung 12 geführten zweiten erwärmten Kühlmittelsteilstrom aufgeteilt werden kann. Die Aufteilung des erwärmten Kühlmittelstromes ist hierbei über ein nach dem Wärmeübertrager 8 in die Leitung 6 geschaltetes Stellglied in Form eines hinsichtlich der Durchflussmenge regelbaren Ventils 15 und ein in die Bypassleitung 12 geschaltetes Stellglied in Form eines hinsichtlich der Durchflussmenge regelbaren Ventils 16 steuerbar.

Insgesamt kann somit allein durch Öffnen und Schließen der Ventile 15 und 16 der Wärmeübertrager 8 in den Kühlkreislauf 4 bzw. aus dem Kühlkreislauf 4 geschaltet werden. Durch eine gezielte nur teilweise Öffnung der Ventile 15, 16 kann eine gezielte Aufteilung des erwärmten Kühlmittelstromes auf den Wärmeübertrager 8 und die Bypassleitung 12 eingestellt werden.

In dem Wärmeübertrager 8 kann durch Übertragung von Wärme des ersten erwärmten Kühlmittelteilstromes an ein zweites Kühlmittel ein erster abgekühlter Kühlmittelteilstrom erzeugt werden.

Mittels einer weiteren Bypassleitung 13 kann ein Anteil oder der gesamte in der Bypassleitung 12 geführte zweite erwärmte Kühlmittelteilstrom oder ein Anteil oder der gesamte den Wärmeübertrager 8 verlassende erste abgekühlte Kühlmittelteilstrom an dem Wärmeübertrager 9 vorbeigeführt werden.

Die Bypassleitung 13 ist hierzu über einen Teiler/Sammler 19 und eine Bypassleitung 17 mit einem in die Leitung 6 zwischen den Wärmeübertrager 8 und den Wärmeübertrager 9 geschalteten Verteiler/Sammler 18 verbunden. Weiterhin ist die Bypassleitung 13 über den Verteiler/Sammler 19 mit der Bypassleitung 12 verbunden.

Der Anteil des den Wärmeübertrager 9 durchströmenden Kühlmittelstromes ist hierbei durch ein nach dem Verteiler/Sammler 15 und vor dem Wärmeübertrager 9 in die Leitung 6 geschaltetes Stellglied in Form eines hinsichtlich der Durchflussmenge regelbaren Ventils 21 und ein in die Bypassleitung 13 geschaltetes Stellglied in Form eines hinsichtlich der Durchflussmenge regelbaren, Ventils 20 steuerbar.

Durch Öffnen und Schließen der Ventile 20 und 21 kann somit der Wärmeübertrager 9 in bzw. aus dem Kühlmittelkreislauf 4 geschaltet werden.

Über die Öffnungsstellung der Ventile 15, 16, 20 und 21 kann die Richtung und Menge des über die Bypassleitung 17 geführten Kühlmittelstromes gesteuert werden. Durch eine nur teilweise Öffnung der Ventile 20, 21 kann eine gezielte Aufteilung des ersten abgekühlten Kühlmittelteilstromes auf den Wärmeübertrager 9 und die Bypassleitung 13 eingestellt werden. Über die Bypassleitung 17 kann aber auch ein Teil des ersten abgekühlten Kühlmittelteilstromes mit dem in der Bypassleitung 12 geführten zweiten erwärmten Kühlmittelteilstrom zusammengeführt und somit an dem zweiten Wärmeübertrager 9 vorbeigeführt werden. Alternativ kann über die Bypassleitung 17 ein Teil oder der gesamte in der Bypassleitung 12 geführte zweite erwärmte Kühlmittelteilstromes mit dem ersten abgekühlten Kühlmittelteilstrom zusammengeführt und dem zweiten Wärmeübertrager 9 zugeführt werden.

In dem Wärmeübertrager 9 wird durch Übertragung von Wärme des über den Verteiler/Sammler 18 zugeführten Kühlmittelteilstromes an ein zweites Kühlmittel ein zweiter abgekühlter Kühlmittelteilstrom erzeugt.

Der in der Bypassleitung 13 an dem Wärmeübertrager 9 vorbeigeführte Kühlmittelstrom und der zweite abgekühlte Kühlmittelstrom werden anschließend mittels eines Sammlers 22 wieder zusammengeführt und über die Zuleitung 5 dem Brennstoffzellenblock 3 zugeführt.

Durch Öffnen und Schließen der Ventile 15, 16, 20, 21 sind wahlweise der erste Wärmeübertrager 8 und/oder der zweite Wärmeübertrager 9 in den Kühlmittelkreislauf 4 schaltbar sind. Insbesondere sind durch Öffnen der Ventile 15 und 21 der erste und der zweite Wärmeübertrager 8, 9 seriell in den Kreislauf 4 schaltbar.

In dem Wärmeübertrager 8 wird die Wärme des ersten Kühlmittels an ein drittes Kühlmittel übertragen, das dem Wärmeübertrager 8 über eine Zufuhrleitung 30 zugeführt und eine Abfuhrleitung 31 abgeführt wird. In die Zufuhrleitung 30 ist ein dritter Wärmeübertrager 32 zur Übertragung von Wärme des zweiten Kühlmittels an das dritte Kühlmittel geschaltet.

Bei dem zweiten Kühlmittel handelt es sich um Wasser, insbesondere Seewasser. Als drittes Kühlmittel wird bevorzugt Umgebungsluft verwendet. Der erste Wärmeübertrager 8 ist somit bevorzugt als Wasser/Wasser-Wärmetauscher und der zweite Wärmeübertrager 9 und der dritte Wärmeübertrager 32 sind bevorzugt als Wasser/Luft-Wärmetauscher ausgebildet.

Eine Steuer- und Regelungseinrichtung 40 ist über Leitungen 45 mit Temperatursensoren 41, 42, 43 verbunden und kann mit Hilfe des Temperatursensors 41 die Temperatur T1 des ersten Kühlmittels in der Zuleitung 5 vor dessen Zufuhr zu dem Brennstoffzellenblock 3, mit Hilfe des Temperatursensors 42 die Temperatur T2 des dem Wärmeübertrager 8 zugeführten zweiten Kühlmittels in der Zuleitung 30 und mit Hilfe des Temperatursensors 43 die Temperatur T3 des dritten Kühlmittels erfassen.

In Abhängigkeit von der Höhe der Temperaturen T1, T2, T3 regelt die Steuer- und Regelungseinrichtung 40 nun über die Stellung der Ventile 10, 15, 16, 20, 21 und somit über die Kühlmittelvolumenströme durch die Wärmeübertrager 8, 9 bzw. die Bypassleitungen 12, 13, 17 die Temperatur T1 des ersten Kühlmittels in der Zuleitung 5 auf einen gewünschten vorgegebenen Wert. Zur Ansteuerung der Ventile 10, 15, 16, 20, 21 ist die Steuer- und Regelungseinrichtung 40 über Steuerleitungen 46 mit den Ventilen 10, 15, 16, 20 verbunden.

Ist beispielsweise tagsüber die Lufttemperatur T3 größer als die Seewassertemperatur T2, so erfolgt die Kühlung des ersten Kühlmittels vor allem durch den Wärmeübertrager 8. Ist nachts dann die Temperatur der Luft kleiner als die des Seewassers, so erfolgt die Kühlung des ersten Kühlmittels vor allem durch den Wärmeübertrager 9. Zusätzlich kann über den Wärmeübertrager 32 das in der Leitung 30 geführte Seewasser vorgekühlt werden und somit die Kühlleistung vergrößert werden.

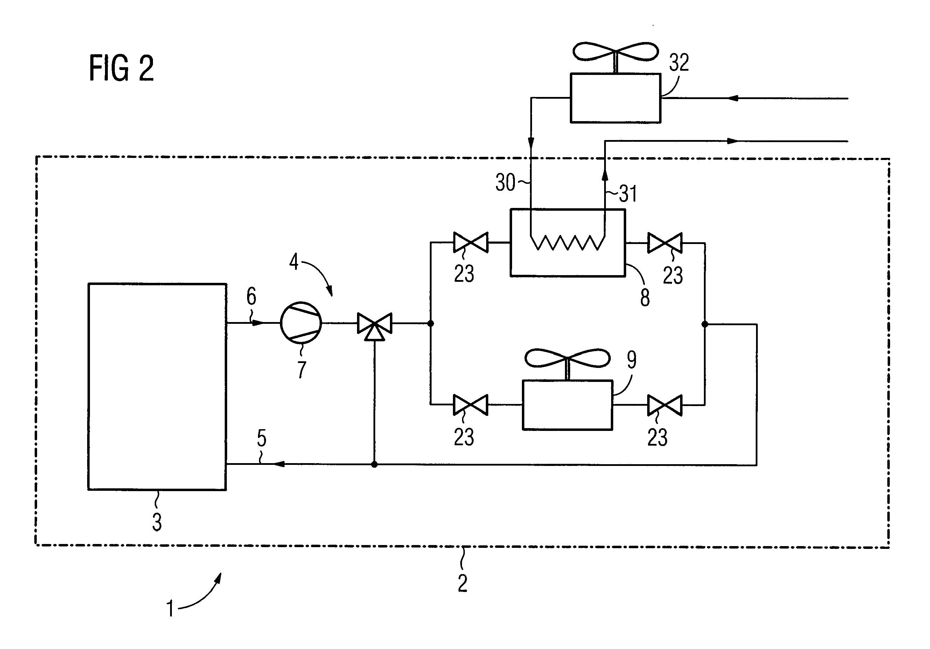

Eine in FIG 2 gezeigte zweiten Ausführungsform der Erfindung unterscheidet sich von der in FIG 1 gezeigten Ausführungsform dadurch, dass die beiden Wärmeübertrager 8, 9 nicht seriell sondern mittels der Stellglieder 23 parallel in den Kreislauf 4 schaltbar sind. Bei einer derartigen Parallelschaltung ist der Druckabfall im Kühlkreislauf 4 geringer, so dass eine Pumpe 7 mit einer vergleichsweise geringeren Pumpförderleistung eingesetzt werden kann. Insgesamt ist durch eine derartige Parallelschaltung eine höhere Kühlleistung möglich.

## Patentansprüche

1. Verfahren zur Wärmeabfuhr aus einer Brennstoffzellenanlage (1), bei dem Wärme der Brennstoffzellenanlage (1) an ein erstes Kühlmittel übertragen wird, **dadurch gekennzeichnet, dass** die Wärme des ersten Kühlmittels wahlweise an ein zweites Kühlmittel, an ein drittes Kühlmittel oder sowohl an das zweite als auch an das dritte Kühlmittel übertragen wird, wobei die Wärmekapazität des zweiten Kühlmittels unterschiedlich ist zu der Wärmekapazität des dritten Kühlmittels.

2. Verfahren nach Anspruch 1, bei dem die Wahl in Abhängigkeit von der Temperatur des zweiten und des dritten Kühlmittels erfolgt.

3. Verfahren nach Anspruch 1, bei dem Wärme des zweiten Kühlmittels an das dritte Kühlmittel übertragen wird.

4. Verfahren nach einem der vorhergehenden Ansprüche, bei dem als zweites Kühlmittel Wasser, insbesondere Seewasser, verwendet wird.

5. Verfahren nach einem der vorhergehenden Ansprüche, bei dem als drittes Kühlmittel Luft verwendet wird.

6. Brennstoffzellenanlage (1) mit einem Kühlmittelkreislauf (4) mit einem ersten Kühlmittel zur Abfuhr von Wärme aus der Brennstoffzellenanlage (1), **gekennzeichnet durch** einen in den ersten Kühlmittelkreislauf (4) schaltbaren ersten Wärmeübertrager (8) zur Übertragung von Wärme des ersten Kühlmittels an ein zweites Kühlmittel, einen in den Kühlmittelkreislauf (4) schaltbaren zweiten Wärmeübertrager (9) zur Übertragung von Wärme des ersten Kühlmittels an ein drittes Kühlmittel, und Stellglieder (15, 16, 20, 21), **durch** die wahlweise der erste Wärmeübertrager (8), der zweite Wärmeübertrager (9) oder sowohl der erste als auch der zweite Wärmeübertrager (8 bzw. 9) in den Kühlmittelkreislauf (4) schaltbar sind, wobei die Wärmekapazität des zweiten Kühlmittels unterschiedlich ist zu der Wärmekapazität des dritten Kühlmittels.

7. Brennstoffzellenanlage (1) nach Anspruch 6, mit einem dritten Wärmeübertrager (32) zur Übertragung von Wärme des zweiten Kühlmittels an das dritte Kühlmittel.

8. Brennstoffzellenanlage (1) nach Anspruch 6 oder 7, mit einer Steuereinrichtung (40) zur Steuerung der Stellglieder (15, 15, 20, 21) in Abhängigkeit von der Temperatur des zweiten Kühlmittels und der Temperatur des dritten Kühlmittels.

9. Brennstoffzellenanlage (1) nach Anspruch 8, wobei durch Steuerung der Stellglieder (15, 15, 20, 21) die Temperatur des ersten Kühlmittels auf einen vorgegebenen Wert regelbar ist.

10. Brennstoffzellenanlage (1) nach einem der Ansprüche 6 bis 9, bei der der erste und der zweite Wärmeübertrager (8 bzw. 9) parallel in den Kreislauf (4) schaltbar sind.

11. Brennstoffzellenanlage (1) nach einem der Ansprüche 6 bis 9, bei der der erste und der zweite Wärmeübertrager (8 bzw. 9) seriell in den Kreislauf (4) schaltbar sind.

12. Brennstoffzellenanlage (1) nach einem der Ansprüche 6 bis 11, bei der das zweite Kühlmittel Wasser, insbesondere Seewasser, ist.

13. Brennstoffzellenanlage (1) nach einem der Ansprüche 6 bis 12, bei der das dritte Kühlmittel Luft ist.
